# EUROPEAN PATENT SPECIFICATION

(11) **EP 4 287 742 B1**
(45) Date of publication and mention of the grant of the patent: **23.07.2025**
(21) Application number: 23176217.0
(22) Date of filing: 30.05.2023
(51) Int. Cl.: H04W 72/0453, H04W 24/06, H04W 72/541

(54) **COMMUNICATION CHANNEL SELECTION SYSTEM AND METHOD**
SYSTEM UND VERFAHREN ZUR AUSWAHL EINES KOMMUNIKATIONSKANALS
SYSTÈME ET PROCÉDÉ DE SÉLECTION DE CANAL DE COMMUNICATION

(30) Priority: 30.05.2022 GB 202207974
(43) Date of publication of application: 06.12.2023
(73) Proprietor: Essence Security International (E.S.I.) Ltd., 4672530 Herzlia Pituach (IL)
(72) Inventor: GABAY, Jacob, Herzlia Pituach 4672530 (IL); AMIR, Ohad, Herzlia Pituach 4672530 (IL); SCHNAPP, Jonathan Mark, Herzlia Pituach 4672530 (IL)
(74) Representative: Marks & Clerk LLP

(56) References cited:
- US-A1- 2002 181 417
- US-A1- 2011 305 293
- US-A1- 2013 286 867
- US-A1- 2015 063 323

## Description

### FIELD

The present disclosure relates to a method for wireless communication channel selection, and associated hub, system and computer program product that implement the method.

### BACKGROUND

Many wirelessly communicating systems comprise a hub and one or more associated peripherals, wherein the hub and the associated wireless communicate over one or more wireless communications channels. Such systems are generally installed at a location, which may comprise at least one building or premises such as a house, factory, office or other business location, amongst others. Examples of such systems includes security systems, smart home automation systems, health monitoring systems, and/or the like, but are not limited to these.

Devices that communicate wirelessly are becoming increasingly commonplace. Wireless communications signals from such other devices that are not intended for the wirelessly communicating system can be seen as noise by the wirelessly communicating system. Furthermore, although frequency bands for wireless communications are generally protected, there can be a level of background noise present that impinges on wireless communication frequency bands. Reducing the impact of such noise on wireless communication by the system and/or reducing the impact that wireless communication by the system has on other wireless communication devices can be beneficial.

US 2002/0181417 A1 discloses selecting a communication channel based on medium activity on a plurality of channels.

US 2013/0286867 A1 discloses a base station requesting a neighboring base station to transmit an interference signal during an expected transmission period in which the base station is not transmitting. A UE may perform interference measurements for the neighboring base station and report back to the base station.

### SUMMARY

Various aspects of the present disclosure are defined in the independent claims. Some preferred features are defined in the dependent claims.

According to a first aspect of the present disclosure is a hub configured for selective wireless communication over any channel of a plurality of wireless communication channels, the hub being configured to:
transmit a response request, the response request comprising a request for at least one or any device receiving and processing at least part of the response request to transmit a response over a listening period;
during the listening period, listen to each channel of the plurality of channels; and
determine an activity characteristic for each channel based, at least in part, on activity received by the hub on the respective channel during the listening period.

The activity may comprise electromagnetic activity, e.g. electromagnetic signals.

The activity may comprise transmissions or signals from devices. The activity characteristic for a given channel may represent a measured amount of activity on that channel. The activity characteristic for at least one or each channel may be representative of no activity being received. The activity received during the listening period may comprise one or more responses transmitted responsive to at least part of the response request. The activity received during the listening period may comprise transmissions by devices transmitting independently of the response request, e.g. not responsive to the response request. Depending on the nature of the devices, not all devices may be configured to receive and process the response request or may not be configured for, or capable of, acting on the response request or may not respond to the response request for other reasons. As such, the activity received by the hub listening for signals received during the listening period may, for at least one or each channel, comprise of one or more or each of: responses from devices that were transmitted responsive to receiving and processing the response request; transmissions by devices independently of the response request; background activity; or any combination thereof, or no activity may be received.

The response request and/or the one or more responses may be configured for emulating, upon each channel during the listening period, activity estimative of a nosiest environment expected to be subsequently possible for the channel during post-installation normal use of the hub (i.e. the use for which the hub is being installed). That noisiest environment may be exclusive of noise potentially generated from devices with which the hub is intended to communicate with during the normal use (e.g. devices of a system to be installed with the hub). Thus, the activity characteristic may therefore represent said activity estimative of a noisiest environment.

The one or more devices may be devices of already installed systems, which may be different systems and/or different types of systems to a system in which the hub is to be comprised. The already installed systems may in use operate (i.e. during their normal use, performing the purpose for which they were installed) independently of the hub. For example, they may be part of separate networks, for example corresponding to different premises. In another example, the already installed systems may be configured to operate with a different hub and optionally are not configured to operate with the hub being installed.

In view of the above, the hub may take into account other devices that could have an effect on communications over the wireless communication channels.

The activity received on the respective channel during the listening period may be activity, such as electromagnetic radiation, that would subsequently be treated as noise by the hub, during normal use of the hub. The activity may comprise any signal that is undesired by the hub during normal use. In other words, if such activity is later received during the normal use of the hub, that activity may constitute noise, e.g. by raising the noise floor (e.g. reducing the signal to noise ratio), and/or by causing interference, with respect to signals intended for the hub during its normal use (e.g. signals from devices controlled by the hub or in any way part of the system comprising the hub). The activity may therefore represent potential noise during normal use of the hub, for example because, during the normal use, the such activity may comprise at least one or all of: signals not intended for the hub; signals not addressed to the hub; signals that the hub is not configured or operable to process (e.g. by being from devices of a different network to the hub); background electromagnetic radiation or transmissions; and/or the like. Therefore, the activity characteristic for a given channel may be indicative of signals transmitted on that channel during the listening period that represent potential noise upon the hub, i.e. unwanted activity that could subsequently occur during normal use of the hub.

The response may comprise a response that is seen by the hub as potential noise during normal use. The response may be or comprise noise (e.g. random or pseudorandom data). The response request may be a request to transmit noise or non-noise data over the listening period.

The hub may be configured to identify (i.e. automatically pick out) a selection of at least one of the channels of the plurality of wireless communication channels for wireless communication based, at least in part, on the activity characteristic for each channel. The hub may be configured to selectively use the identified channel(s) for communications. The selective use of the identified channel(s) may occur automatically in response to the identifying of the selection. In some embodiments a single wireless communication channel is identified. In some embodiments is a single wireless communication channel is used.

The hub may be configured to provide or output an indication of the identified channel(s). Additionally or alternatively, the hub may be configured to provide or output an indication of the activity characteristic for one or more or each of the plurality of channels. The hub may be configured to present the indication of the identified channel(s) and/or the indication of the activity characteristic for one or more or each of the plurality of channels to a user, e.g. via a user interface or via transmission to another device such as a user device, or the like. The presentation may comprise at least one of: a graphical, textual or other visual, audible or haptic indication of the activity characteristic. The hub and/or said another device may be configured to selectively present the channels to the user based on the activity characteristic. The selectively presenting of the channels to the user may comprise one or more of: selectively presenting only those channels whose activity characteristic is below a threshold, selectively presenting only a subset of the plurality of channels comprising a set or pre-set number of the channels having the lowest activity characteristic, and/or the like. The hub may be configured to rank or otherwise order the channels presented to the user according to the activity characteristic of the channels.

The hub may be configured to receive a selection of the communication channel to be used for communication, which may be received after the indication has been provided. The selection of the channel to be used may be a selection by the user. The hub may be configured to receive the selection by the user of the communication channel to be used for communication via the user interface or via another device such as the user device.

Subsequently, (e.g. during normal use) the hub may be configured to selectively wirelessly communicate using the channel or channels selected for use. In view of the above, in some examples, the hub's ability to wirelessly communicate may be improved.

The at least one activity characteristic may be or comprise an activity profile or activity metric, which may be representative of activity on at least one of the wireless communications channels that would be seen as noise by the hub during regular use. The at least one activity characteristic may be, comprise or be indicative of at least one of: average received signal strength, peak received signal strength, and/or the like. The at least one activity characteristic may be, comprise, be indicative of, or be based on a received signal strength (e.g. RSSI or dBm), such as at least one of a peak and/or average received signal strength, for at least part or all of the listening period. The at least one activity characteristic may be, comprise, be indicative of, or be based on an accumulation of received signal strength over at least part or all of the listening period. The at least one activity characteristic may have a logarithmic scale.

The hub may be configured to identify the selection of the at least one of the channels of the plurality of wireless communication channels having a best activity characteristic for wireless communication. The best activity characteristic may be the activity characteristic indicative of and/or derived from one or more of: lowest average received signal strength, lowest peak received signal strength, and/or the like. The hub may be configured to identify the selection of the at least one of the channels of the plurality of wireless communication channels for wireless communication from amongst any of the plurality of wireless communication channels for which the activity characteristic indicates activity below a threshold measure of activity (e.g. RSSI, dBm, etc.) or meets one or more quality criteria. In view of the above, in some examples, the hub's ability to wirelessly communicate with its associated peripherals may be automatically improved.

The at least one activity characteristic may be or comprise a function of both peak and average received signal strength, for at least part or all of the listening period. The at least one activity characteristic may be, comprise or be indicative of a weighted sum or other weighted combination of: an average received signal strength and a peak received signal strength, over at least part or all of the listening period.

The hub may be a hub for a system that comprises one or more peripherals of the system that are configured or configurable to wirelessly communicate with the hub over any channel of a plurality of wireless communication channels. The channel of the plurality of channels used for wireless communication between the hub and the one or more peripherals of the system may have been selectively assigned by the hub, i.e. the channel may be selected for use. The channel of the plurality of channels that may have been selectively assigned by the hub may be the identified selection or a user selection. The system may be a system for a premises. The one or more peripherals of the system and the hub may be configured for local wireless communication within the premises over whichever of the plurality of channels is assigned by the hub. The hub may be configured to selectively wirelessly communicate with the one or more peripherals using the assigned channel or channels. In some embodiments, a single channel is assigned. The system may be, comprise or be comprised in at least one of: a security system, a smart home automation system and/or or a health monitoring system.

The hub may be configured to identify the selection of the at least one of the channels of the plurality of wireless communication channels for wireless communication based in part on the activity characteristic for each channel and in part using at least one additional metric. The at least one additional metric may comprise at least one of: data capacity of each channel, the number of devices communicating using each channel, security level or relative security of each channel, a type of data being communicated using the channel, a set or pre-set channel preference, an encryption level or standard of each channel, and/or the like. In view of the above, in some examples, factors other than channel transmission quality may additionally be taken into account for channel selection.

The one or more devices of the already installed systems may comprise at least one control device that is configured to wirelessly control operation of at least one peripheral of the already installed system. The control device may be an already installed hub of the already installed system. The at least one peripheral of the already installed system may be a peripheral serviced by or otherwise controlled by the already installed hub.

The response request may be transmitted over all of the channels.

The response request may comprise a plurality of response request signals, wherein a response request signal is transmitted at least once on each of the channels. That is, the response request may comprise the plurality of response request signals, and wherein, in transmitting the response request, at least one respective response request signal from the plurality of response request signals may be transmitted on respective channels of the plurality of channels. In this way, a likelihood of response of the device of the already installed system to the request may be improved.

Transmitting the response request may comprise transmitting a response request signal a plurality of times, e.g. two, three or more times, on each of the channels. In view of the above, if a device of the already installed system is busy when a first of the response request signals are transmitted, it may still receive and process a subsequent one of the response request signals.

A listening period for a given channel may be followed by a response request signal for a different channel. For example, the hub may be configured to transmit a response request signal associated with one of the plurality of channels channel and implement the listening period for that channel before transmitting a response request signal for another of the plurality of channels.

However, preferably the response request includes response request signals for all channels before the listening period. The response request may comprise sequentially transmitting response request signals for each respective channel of the plurality of channels, e.g. transmitting a response request signal for one of the channels before transmitting a response request signal for another of the channels. The response request may cause the response to be transmitted for all, or substantially all, of the listening period. In view of the above, in examples, crosstalk from one channel into another channel may be taken into account when the hub is measuring the other channel. Optionally, during the listening period the hub may listen to each of the channels sequentially, e.g. one at a time.

The listening period may be at least as long as, but in some embodiments longer than, the number of channels multiplied by a length of time for listening on each channel. The length of time for listening to each channel may be at least one second. This may be beneficial as if there are additional already installed systems that are not responsive to the request, and if these operate using a beacon-based communication protocol, noise may also be received from those further already installed systems. The period between such beacons would not normally not be more than 1 second. So by listening for at least one second, most likely their signal contribution would be detectable by the hub.

The length of time for listening to each channel may be a value that is more than 1 and up to 3 seconds (e.g. 2 seconds). The listening period may be no more than 15 seconds. For example, it may be about 10 seconds.

The listening period may correspond to a signal generating period for devices that receive and process the request to transmit a response to the hub. It may be advantageous to limit the duration of the signal generating period (and hence the listening period) because while hubs of already installed systems are transmitting the response they may be unable to receive any notifications from any peripherals. Thus, any supervision performed by hubs of already installed systems may be suspended over the course of the period in which they are generating the response that is seen by the hub as potential noise. For some kinds of systems, e.g. security systems, it is important to keep such a suspension to as low a duration of time as possible.

The transmitted response request may be a broadcasted transmission (e.g. which may for example involve setting a source addressing to a particular value reserved for broadcasting). This may enable the devices of already installed systems to respond without having to address those devices. For example respective identities of those device may not be known in advance to the hub.

During use, the hub may communicate with the peripherals of the system using a low-bandwidth, long-range wireless communication protocol (e.g. Amazon Sidewalk(TM)) or a wireless home area network (WHAN), wireless personal area network (WPAN) or wireless local area network (WLAN) protocol, or the like, which may for example be a protocol in accordance with or similar to IEEE 802.15.4, for example.

During use, the hub may be configured to communicate with the peripherals of the system using a sub 1 GHz protocol.

The request comprised in the response request may be a request for devices that receive and process the response request and transmit the response at a maximum predefined power. In examples, one or more of the devices that receive and process the response request may, during use, transmit signals at different power levels at different times, with the power levels varying, e.g. between a predefined minimum and a predefined maximum. To account for such cases, devices that receive and process the response request and transmit a response to it may be configured to transmit the response at the maximum predefined power. In this way the hub may better take into account worst case activity that may occur during post-installation use.

According to a second aspect of the present disclosure a system comprises a first hub, the first hub being or comprising the hub of the first aspect, the system further comprising a second hub and a plurality of associated peripherals associated with the second hub, wherein the second hub has a transceiver configured for wirelessly communicating with the second hub's associated peripherals on a channel, the second hub being configured so that the transceiver of the second hub can also receive and process at least part of the response request from the first hub, wherein, in response to receiving and processing the at least part of the response request, the second hub is configured to:
during a response generating period, transmit a response on the channel to the first hub.

The at least part of the request may be a response request signal from a plurality of response request signals, wherein the request comprises the plurality of response request signals, wherein a response request signal is transmitted at least once on each of the channels. In other embodiments, the second hub may receive and process the whole request, for example by having a plurality of receivers for respective channels, each receiver receiving and processing a response request signal on the respective channel. The second hub may be configured to, in response to receiving and processing the at least part of the response request, control or otherwise request at least one or all of its associated peripherals to transmit a response on the channel to the first hub during the response generating period.

The response may comprise a signal that is seen by the hub as potential noise.

The response may be or comprise a noise signal (e.g. random or pseudo-random data) or non-noise signal. In either case, were such a response transmitted during communication between the first hub and a peripheral associated with the first hub, such as response would be noise from the perspective of the first hub. Therefore the response may be representative of noise that could occur when the hub and a peripheral associated with the first hub are later in communication.

The response generating period may correspond to at least part or all or more than all of the listening period during which the first hub listens for responses. The response generating period may overlap the listening period during which the first hub listens for responses.

The response may be transmitted for at least 50% of the response generating period. The response may be transmitted for all or substantially all (e.g. 90% or more) of the response generating period.

The response may comprise a single transmission or a plurality of packets.

During operation of the system, in which the second hub may communicate data to the peripherals, the second hub may transmit periodic beacons with a regularity definable as a beacon interval. The response may last the duration of a plurality of beacons. The response may be interlaced with beacons. During the beacon interval, the response may be further broken into multiple packets. However, in other examples, when the second hub transmits the response it may transmit no beacons in a time between commencing and concluding the response.

Transmitting the response by the second hub may comprise transmitting data, such as noise or non-random data (e.g. as opposed to periods of quiet, like between data packets), a majority of the time, and preferably throughout all or substantially all (e.g. at least 90%) of the time, over which the response is transmitted.

The channel may be a channel that had been assigned from a plurality of channels on which the transceiver is capable of operating, wherein the assigned channel is always used when communicating with the peripherals.

Preferably, during the response generating period, the second hub only transmits on said assigned channel.

The response generating period preferably lasts for at least as long as the number of channels multiplied by one second. The response generating period may last for at least as long the number of channels multiplied a value that is more than 1 and up to 3 seconds, e.g. 2 seconds. The response generating period may be 15 seconds or less. For example the response generating period may be about 10 seconds.

The response generating period may commence a delayed time after receiving the response request. This may advantageously allow enough time for second hubs of other systems to also hear the request without causing responses that could present as noise at the other second hubs that interferes with the other second hubs receipt of subsequent requests transmitted by the first hub after commencement of the response generating period. The delay may comprise an interval for the second hub to communicate to its associated peripherals to command the associated peripherals to also transmit a response on the channel to the first hub.

The second hub may be configured to coordinate with its peripherals so that the second hub and each of its associated peripheral transmits their respective responses at the same time.

The system may be configured to ignore further response request transmissions after the response generating period at least for a minimum period of time, e.g. 30 minutes. This may help prevent malicious attempts to interfere with the functionality of the system by incessantly supplying the system with response requests.

The system may further comprise a third hub and at least one further peripheral associated with the third hub. The third hub may have a transceiver configured for wirelessly communicating with the at least one further peripheral associated with the third hub on a channel, so that the third hub can also receive and process the response request from the first hub, wherein in response to receiving and processing the response request the third hub is configured to:
during the response generating period, transmit a response on the channel to the first hub.

The response may be a response that is seen by the first hub as potential noise. The response may be or comprise noise or non-noise data. Preferably the response transmitted by the third hub and the response transmitted by the second hub are substantially at the same time.

According to a third aspect of the present disclosure is a method for use in selective wireless communication over any channel of a plurality of wireless communication channels, the method comprising:
transmitting, a response request, the response request comprising a request for at least one or any device receiving and processing the signal to transmit a response over a listening period;
during the listening period, listening to each channel of the plurality of channels; and
determining an activity characteristic for each channel based, at least in part, on the activity received on the respective channel during the listening period.

The method may comprise operating or otherwise using the hub of the first aspect to perform the method. The method may comprise operating or otherwise using the hub of the system of the second aspect to perform the method.

According to a fourth aspect of the present disclosure is a computer program product configured such that, when implemented on a hub that is configured for selective wireless communication over any channel of a plurality of wireless communication channels, causes the hub to perform the method of the third aspect.

The computer program product may be embodied on a non-transient physical computer readable medium.

The individual features and/or combinations of features defined above in accordance with any aspect of the present disclosure or below in relation to any specific embodiment of the disclosure may be utilised, either separately and individually, alone or in combination with any other defined feature, in any other aspect or embodiment of the disclosure.

Furthermore, the present disclosure is intended to cover apparatus configured to perform any feature described herein in relation to a method and/or a method of using or producing, using or manufacturing any apparatus feature described herein.

### BRIEF DESCRIPTION OF THE DRAWINGS

For a better understanding of the present disclosure and to show how embodiments may be put into effect, reference is made to the accompanying drawings in which:
Figure 1 is a schematic representation of a wirelessly communicating system comprising a hub configured for a wireless communication channel selection method in an exemplary environment in which there is a presence of different types of pre-installed systems;
Figure 2 is a schematic representation of the wirelessly communicating system of Figure 1 during a listening period of the method;
Figure 3 is a swim lane diagram illustrating some exemplary signals being transmitted in the method for the example of the hub and preinstalled systems of Figure 1 during the wireless communication channel selection method;
Figure 4 is an example of amplitude versus frequency of signals that may be incident upon the hub, resulting from transmissions from a pre-installed system transmitting on one of a plurality of channels from which a channel is to be selected in the method;
Figure 5 is a table giving example values of activity on channels ch1-ch5 illustrated in Figures 1 to 4;
Figure 6 is a table containing channel rankings based on the activity characteristics in the table of Figure 5;
Figure 7 is a flowchart illustrating a method of operation of the hub of the wirelessly communicating system of Figure 1 for wireless communication channel selection; and
Figure 8 is a schematic illustration of an exemplary hub that could be used in the wirelessly communicating system of Figure 1.

### DETAILED DESCRIPTION

In the following detailed description, reference is made to the accompanying drawings that form a part hereof, and in which is shown by way of illustration specific embodiments in which the inventive subject matter may be practiced. These embodiments are described in sufficient detail to enable those skilled in the art to practice them, and it is to be understood that other embodiments may be utilized, and that structural, logical, and electrical changes may be made without departing from the scope of the inventive subject matter. Such embodiments of the inventive subject matter may be referred to, individually and/or collectively, herein by the term "invention" merely for convenience and without intending to voluntarily limit the scope of this application to any single invention or inventive concept if more than one is in fact disclosed.

The following description is, therefore, not to be taken in a limited sense, and the scope of the inventive subject matter is defined by the appended claims.

In the following embodiments, like components are labelled with like reference numerals.

In the following embodiments, the term data store or memory is intended to encompass any computer readable storage medium and/or device (or collection of data storage mediums and/or devices). Examples of data stores include, but are not limited to, optical disks (e.g., CD-ROM, DVD-ROM, etc.), magnetic disks (e.g., hard disks, floppy disks, etc.), memory circuits (e.g., EEPROM, solid state drives, random-access memory (RAM), etc.), and/or the like.

As used herein, except wherein the context requires otherwise, the terms "comprises", "includes", "has" and grammatical variants of these terms, are not intended to be exhaustive. They are intended to allow for the possibility of further additives, components, integers or steps.

The functions or algorithms described herein are implemented in hardware, software or a combination of software and hardware in one or more embodiments. The software comprises computer executable instructions stored on computer readable carrier media such as memory or other type of storage devices. Further, described functions may correspond to modules, which may be software, hardware, firmware, or any combination thereof. Multiple functions are performed in one or more modules as desired, and the embodiments described are merely examples. The software is executed on a digital signal processor, ASIC, FPGA, microprocessor, microcontroller or other type of processing device or combination thereof.

Specific embodiments will now be described with reference to the drawings.

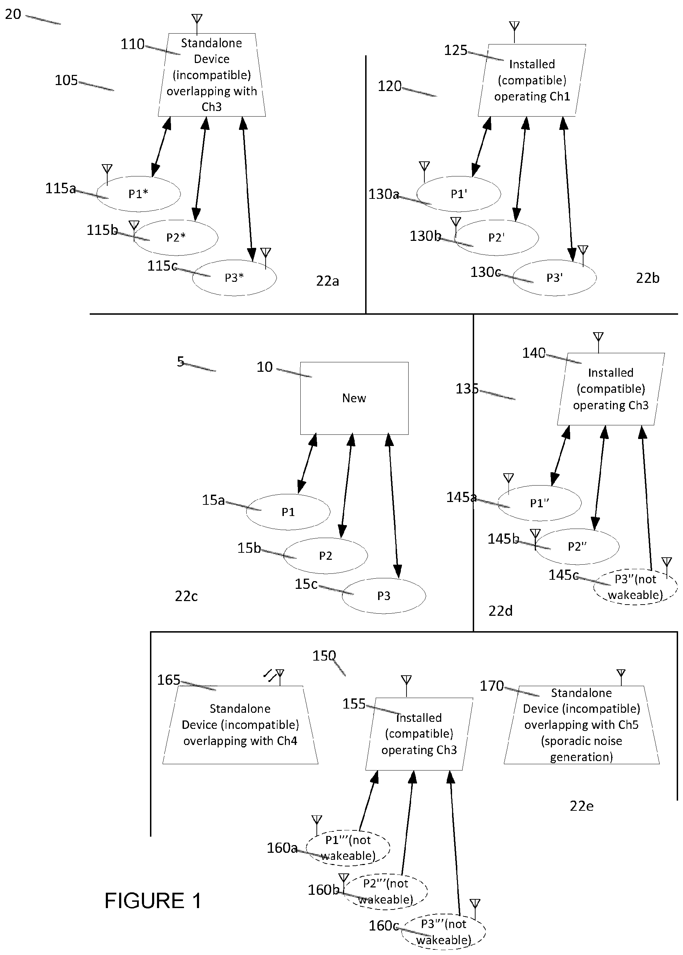

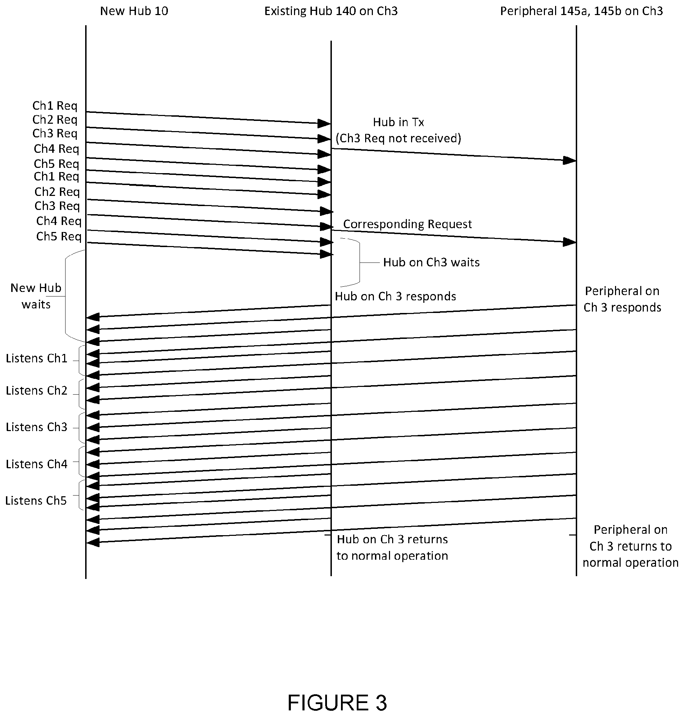

Figure 1 shows a wirelessly communicating system 5 to be installed at a location. The location could be a building or premises, such as a house, factory, office or other business setting, healthcare setting, or the like. The wirelessly communicating system 5 comprises a hub 10 and a plurality of associated peripherals 15a, 15b, 15c. The hub 10 and its associated peripherals 15a, 15b, 15c are configured to wirelessly communicate over any of a plurality of wireless communications channels ch1-ch5 (see Figure 3). That is, the hub 10 and the peripherals 15a, 15b, 15c can selectively wirelessly communicate over a selection of one or more of the plurality of wireless communications channels ch1-ch5.

During use, the hub 10 optionally communicates with its associated peripherals 15a-15c using a wireless home area network (WHAN), wireless personal area network (WPAN) or wireless local area network (WLAN) protocol, or the like. The communications protocol could be, for example, a protocol in accordance with or similar to IEEE 802.15.4, or the like. During use, the hub 10 optionally communicates with its associated peripherals 15a-15c using a sub 1 GHz protocol.

Although the present example is described in terms of installation of a new system 5, the same process may be used for wireless communication channel selection, e.g. periodically or on request, which could allow for changes in the wirelessly communicating systems and devices at the location. A possible approach to selecting the one or more wireless communication channels from the plurality of wireless communications channels is to make the selection at installation, e.g. by an installer. An additional possibility would be to have the wireless communication channel(s) selected or re-selected after installation, e.g. by a user or service agent. A further possibility would be to have the hub 10 automatically make any such selection of wireless communication channel(s) ch1-ch5 to be used for wireless communication between the hub 10 and its associated peripheral(s) 15a, 15b, 15c, which may be done on installation, periodically, responsive to a user input, or according to any other suitable criteria.

Beneficially, the hub 10 is configured to make a determination of activity (if there is any) on each channel ch1-ch5. The activity represents activity on the channel ch1-ch5 that would be seen as noise by the system 5 (particularly by the hub 10) were the activity to occur during normal operation of the system 5. In this way, the selection of the wireless communications channel(s) ch1-ch5 subsequently used for wireless communications between the hub 10 and its associated peripherals 15a, 15b, 15c can be based on, or informed by, the determined activity for each channel ch1-ch5. This helps reduce the effect of noise on wireless communications by the system 5 and/or reduce the impact of wireless communications made by the system 5 on other wirelessly communicating devices.

The activity could comprise, for example, communications between devices of already installed systems, which could include different systems or different types of systems. Examples of activity may comprise at least one or all of: signals not intended for the hub; signals not addressed to the hub; signals that the hub is not configured or operable to process (e.g. by being from devices of a different network to the hub); background electromagnetic radiation or transmissions; and/or the like. Such activity can exclude communications made between the hub 10 and its associated peripherals 15a, 15b, 15c.

However, many wirelessly communicating devices only transmit periodically or occasionally or their transmissions vary over time. In this case, there is a risk that the activity for each channel is measured during a period in which one or more devices are not transmitting or are transmitting a relatively low power or low impact transmission compared with their maximum power or highest impact transmission. As such, making channel determinations based on such activity (or lack of activity) could result in a sub-optimal channel selection.

However, some activity may be caused by preinstalled systems that the hub 10 is compatible with, for example other systems manufactured by the same manufacturer, in the sense that it may be achievable for the hub 10 to provide at least one request to such preinstalled systems. To aid in channel selection for hub 10, it would be beneficial if the hub 10 could configure such systems to ensure that they do in fact transmit while the hub 10 is listening to assess activity. Further, it would be beneficial to configure these systems so that transmissions from different devices that, left to their own, might coincidentally be simultaneous (thereby causing a superposition of noise) are forced (or at least made more likely) to be simultaneous during the listening period. In this way the activity during the listening period may be more representative of a worst-case noise that may potentially occur at some point in time "in use", i.e. potential noise which may occur at some point during post-installation operation of the system 5. As such, this may enable for more appropriate channel selection.

In examples, the hub 10 is configured to transmit a response request, the response request comprising a request for devices that receive and process the response request to transmit a response over a listening period. The request may specify that the response should be sent using the wireless communication channel or channels that the device that receives and processes the response request would normally use to communicate. The hub 10 is further configured to, during the listening period, listen to each channel of the plurality of channels. The hub 10 is also configured to determine an activity characteristic for each channel based, at least in part, on activity received by the hub on the respective channel during the listening period. In this way, any devices that are capable of receiving, processing and acting on at least part of the response request, can transmit a response during the listening period. In this way, the hub 10 can better take into account such other devices that could have an effect on communications over the wireless communication channels.

In some embodiments, preinstalled systems may, during use, transmit at fixed power levels. In this case the preinstalled systems are configured to transmit the response to the response request at that fixed power level. However, in other embodiments, one or more preinstalled systems may, during use, transmit signals at different power levels at different times, with the power levels varying between a predefined minimum and a predefined maximum. The predefined minimum and/or maximum may respectively be the minimum and maximum operating limits of the transceiver (i.e. what the transceiver is capable of operating at, e.g. prior to installation of the preinstalled system) or may respectively be determined by a configuration setting determined when the preinstalled system had been installed or at some time thereafter. In the latter case, the predefined minimum may be greater than the minimum operating limit and/or the predefined maximum may be less than the maximum operating limit. To account for such cases in which a preinstalled system may, during use, transmit signals at different power levels at different times, devices that receive and process the response request and transmit a response to it may be configured to transmit the response at the maximum predefined power. In this way the hub 10 can better take into account worst case activity that may occur during post-installation use.

Figure 1 illustrates an example situation at a location 20. The location 20 is an area in which wirelessly communicating devices at the location 20 can potentially significantly interfere with the communications made between the hub 10 and the peripherals 15a-15c of the system 5 to be installed. In the particular example of Figure 1, the location 20 comprises a plurality of premises 22a-22e (e.g. different apartments). In one of these premises 22c the system 5 is, or is to be, installed. At the location 20 there are already pre-installed systems 105, 120, 135, 150 which, in the example of Figure 1 are in neighboring (though not necessarily immediately neighboring) premises 22a, 22b, 22d, 22e. However in other examples, one or more of the pre-installed systems 105, 120, 135, 150 may be in the same premises 22c as system 5.

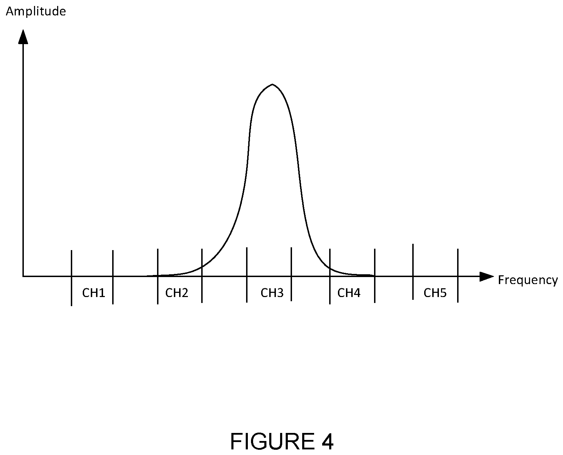

A first pre-installed system 105 is already installed at one of the premises 22a at the location 20. The first pre-installed system 105 comprises a first pre-installed hub 110 that communicates wirelessly with a plurality of first pre-installed peripherals 115a, 115b, 115b using a third wireless communications channel ch3 (see Figures 3 and 4) of the plurality of wireless communications channels ch1-ch5. The first pre-installed system 105 (including the first pre-installed hub 110 and first pre-installed peripherals 115a-115c) is not able to interpret any communications from the hub 10 and as such is not configured to receive and process the response request from the hub 10. Therefore, the first pre-installed system hub 110 will simply continue to communicate with its associated first pre-installed peripherals 115a, 115b, 115c in the manner that it usually does during normal operation.

A second pre-installed wirelessly communicating system 120 is also provided at the location 20, in the premises 22b. The second pre-installed wirelessly communicating system 120 comprises a second pre-installed hub 125 that wirelessly communicates with a plurality of associated second pre-installed peripherals 130a, 130b, 130c over a first wireless communications channel ch1 of the plurality of wireless communication channels ch1-ch5 (see Figures 3 and 4). The second pre-installed system 120 is configured to receive, process and act on the response request from the hub 10. In particular, during the listening period, the second pre-installed hub 125 acts on the response request signal by transmitting the response on the first wireless communications channel ch1 over the listening period. In this example, the second pre-installed peripherals 130a, 130b, 130c are wakeable to receive and action the response request from the hub 10, or can commanded by the second pre-installed hub 125 responsive to the response request, to also transmit during the listening period. For example, the hub 125 may, in response to receiving and processing the request from the hub 10, signal to each of its peripherals 130a-130c to wake and respond to the request. Optionally, the second pre-installed hub 125 can coordinate with its associated second pre-installed peripherals 130a, 130b, 130c so that the second pre-installed hub 125 and each of its associated second pre-installed peripherals 130a, 130b, 130c transmits their respective responses at the same time at least for a predetermined minimum period of time. In this way, even if the second pre-installed wirelessly communicating system 120 would not have been communicating during the listening period as part of its normal operation, the second pre-installed system 120 transmits response(s) during the listening period responsive to receiving and processing the response request from the hub 10. As such, activity on the first wireless communications channel ch1 due to wireless communications of the second pre-installed system 120 that would be considered noise during normal operation of the wirelessly communicating system 5 can be determined by the hub 10 regardless of whether or not the second pre-installed system 120 would be transmitting during the listening period or not as part of its normal, regular operation. In this way, activity on the first wireless communications channel ch1 determined by the hub 10 is more representative of worst-case activity on that channel ch1 in use, which can in turn improve the channel selection and ultimately may contribute to a reduction in interference between wirelessly communicating systems.

Figure 1 also shows an example of a third pre-installed wirelessly communicating system 135 at the location 20, in premises 22d. The third pre-installed wirelessly communicating system 135 comprises a third pre-installed hub 140 that wirelessly communicates with one or more associated third pre-installed peripherals 145a, 145b, 145c over the third wireless communications channel ch3 of the plurality of wireless communications channels ch1-ch5. The third pre-installed hub 140 is configured to receive and process the response request from the hub 10. One or more (in this example two) of the third pre-installed peripherals 145a, 145b are wakeable by the third pre-installed hub 140 so as to be commanded to transmit responses during the listening period. However, in this example, one or more of the third pre-installed peripherals are not wakeable on demand by the third pre-installed hub 140. As such, whilst the third pre-installed hub 140 and the one or more wakeable third pre-installed peripherals 145a, 145b all transmit responses during the listening period responsive to the response request from the hub 10, the one or more unwakeable third pre-installed peripherals 145c may or may not transmit during the listening period depending on whether they would transmit or not as part of their normal operation irrespective of the response request. As such, even though one or more of the peripherals of the third pre-installed system 135 are not wakeable in response to the response request, those that can respond responsive to the response request do so. Thus, the determination of potential noise by the hub 10 can still be improved by virtue of responses from the hub 140 and the wakeable peripherals 145a, 145b.

A fourth pre-installed wirelessly communicating system 150 is shown in Figure 1 as an example of another type of pre-installed wirelessly communicating system. The fourth pre-installed wirelessly communicating system 150 comprises a fourth pre-installed hub 155 and a plurality of fourth pre-installed peripherals 160a, 160b, 160c that wirelessly communicate via the third wireless channel ch3 of the plurality of wireless communications channels ch1-ch5. The fourth pre-installed hub 155 is configured to receive and process the response request. However, none of the fourth pre-installed peripherals 169a, 160b, 160c are wakeable on demand. As such, the fourth pre-installed hub 155 transmits a response on the third wireless communications channel ch3 over the response period responsive to the response request regardless of whether or not it would have done so as part of its normal operation. However, whether or not any transmissions are made by the fourth pre-installed peripherals 160a, 160b, 160c depends on whether they would have made any transmission as part of their normal operation and not responsive to the response request. In this way, the activity that can be received by the hub 10 during the listening period can be enhanced even though the peripherals 160a-160c of the fourth pre-installed wirelessly communicating system 150 are not wakeable on demand.

Wireless transmissions that could be seen as noise by the wirelessly transmitting system 5 are not limited to those originating from other wirelessly transmitting systems 105, 120, 135, 150, but could include stand-alone devices, such as stand-alone devices 165, 170 shown in Figure 1. An example of a first standalone device 165 is shown in Figure 1. The first standalone device 165 is not configured to receive and process the response request from the hub 10 but does transmit continuously on a fourth channel ch4 of the plurality of wireless communications channels ch1-ch5. As such, activity for the fourth channel during the listening period determined by the hub 10 does take into account the first standalone device 165, even though it is not operable responsive to the response request. A second standalone device 170 is also not configured to receive and process the response request. The second standalone device 170 transmits sporadically on a fifth wireless communications channel ch5 of the plurality of wireless communications channels ch1-ch5. As such, whether or not transmissions by the second standalone device 170 are included in the determination by the hub 10 of activity during the listening period for the fifth wireless communications channel ch5 depends on whether or not the second standalone device 170 transmits during the listening period as part of its normal operation and is not responsive to the response request transmitted by the hub 10.

As such, the determination of activity during the listening period for each wireless communications channel ch1-ch5 might not correspond to the maximum possible activity but could correspond to the maximum activity that can be provided through a mixture of systems 105, 120, 135, 150 and devices 165, 175 transmitting responses to the response request sent by the hub 10 and transmitting only because transmitting during the listening period was part of their normal operation and not because of the response request.

The response request in some examples is a broadcast response request, which optionally could be made by sending the response request stating an address (e.g. an address of a recipient field) that had been reserved for broadcasting. This can enable pre-installed systems and devices to be addressed without having to individually address those systems and devices. The preinstalled systems capable of receiving and processing the request, namely systems 120, 135, and 150, may do so by operating the same or a compatible protocol as the hub 10.

The responses to the response request could be in the form of a signal comprising one or more of noise (e.g. random/pseudo-random data), non-random data, a pre-defined signal, or the like. In examples, the responses are provided over at least most of the listening period, and could be provided over at least 80%, at least 90% or substantially all of the listening period.

The listening period could be set by the hub 10 and/or be in some pre-defined relation to the transmission of the response request. For example, the listening period could be a set or pre-set period starting after a set or pre-set delay period after transmitting the response request. The delay period could allow more or all of the systems or devices at the location 20 to receive the response request before the listening period begins. Furthermore, in compatible systems 120, 135, 150 that comprise a hub and peripherals, the delay allows the hub to command its associated peripherals to also transmit a response, and optionally allows the hub and peripherals to coordinate responses so that the responses are transmitted at the same time or in some other defined relationship. A transmission period during which the systems 120, 135, 150 that receive and can action the response request transmit their responses can be defined in relation to a transmission delay after receiving and processing at least part of the response request. The transmission period overlaps at least some, most, all or more than all of the listening period and need not be exactly in register with the listening period. Beneficially, the transmission periods of each of the systems 120, 135, 150 that can receive and action the response requests partly, mostly or wholly overlap. In this way, the effect of cross talk between transmissions from different systems can be better taken into account.

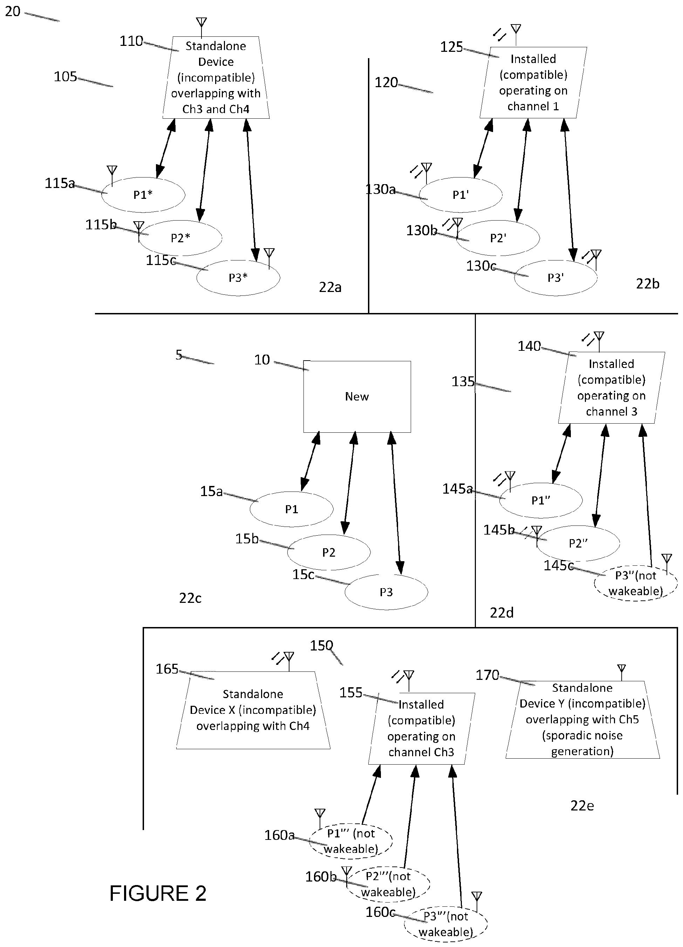

Figure 2 shows the wirelessly communicating system 5 shown in Figure 1, including the hub 10 and the associated peripherals 15a-15c annotated with double arrows to show which systems or devices transmit for a considerable proportion of the listening period.

Figure 2 shows the pre-installed system 105 that comprises the pre-installed hub 110 and associated pre-installed peripherals 115a-115c, which communicate with each other in this example using frequencies overlapping wireless communications channels ch3 and ch4. This system 105 is not configured to receive and process the response request from the hub 10, so cannot provide a response signal. However, any intra-system communications between the pre-installed hub 110 and associated pre-installed peripherals 115a-115c during the listening period will contribute to the measured activity for channels ch3 and ch4. Such intra-system communications may include for example a periodic beacon transmitted from the hub 110, such beacons tending to be no less frequent that once per second.

In contrast, the second pre-installed hub 125 of the second pre-installed system 120 is configured to receive, process and action the response request from the hub 10 and the pre-installed peripherals 130a-130c of the second pre-installed wirelessly communicating system 120 are wakeable on demand and controllable by the second pre-installed hub 125 responsive to the response request. As such, as can be seen in Figure 2, the second pre-installed hub 125 and the associated second pre-installed peripherals 130a-130c of the second pre-installed system 120 transmit responses during a transmission period that overlaps with the listening period, and so contribute to the activity for channel 1 during the listing period as determined by the hub 10.

The third pre-installed hub 140 of the third per-installed system 135 is configured to receive, process and action the response request from the hub 10. As noted above in relation to Figure 1, some of the pre-installed third peripherals 145a, 145b associated with the third pre-installed hub 140 can be woken on demand and controlled by the third pre-installed hub 140 responsive to the third pre-installed hub 140 receiving at least part of the response request, whilst some of the pre-installed peripherals 145c are not wakeable on demand. As such, during the listening period, the third pre-installed hub 140 and any of its associated third pre-installed peripherals 145a, 145b that are wakeable on demand transmit responses to the response request over the listening period, as shown in Figure 2, whereas the associated third pre-installed peripherals 145c that are not wakeable on demand may or may not transmit during the listening period depending on whether they would do anyway due to their normal use operation and not responsive to the response request.

In the fourth pre-installed wirelessly communicating system 150, whilst the fourth pre-installed hub 155 is configured to receive, process and action the response request from the hub 10, none of the associated fourth pre-installed peripherals 160a-160c are wakeable on demand by the fourth pre-installed hub 155. As such, during the listening period, the fourth pre-installed hub 155 transmits responses to the response request during a transmission period that overlaps the listening period, whilst the associated pre-installed peripherals 160a-160c, which are not wakeable on demand, may or may not transmit during the listening period depending on whether they would do anyway due to their normal use operation and not responsive to the response request.

Figure 2 also shows the pre-installed standalone device 165 that can't receive and process the response request from the hub 10 but transmits constantly on frequencies that overlap with wireless communications channel ch4. Figure 2 also shows the pre-installed standalone device 170, that cannot receive and process the response request from the hub 10 and only transmits sporadically on wireless communication channel ch5. As such, the activity on wireless communications channel ch5 seen by the hub 10 during the listening period may or may not include transmissions from the pre-installed standalone device 170, depending on whether or not the pre-installed standalone device 170 transmits during the listening period as part of its normal routine operation but not responsive to the response request transmitted by the hub 10.

It will be appreciated that variations and other combinations of the specific examples described above in relation to Figures 1 and 2 are possible. For example, there may be more or less systems or standalone devices present at any given location 20 than those shown in Figures 1 and 2. Further, already installed systems capable of contributing noise need only be capable of transmitting signals at a strength strong enough to be detected by the hub 10 despite not being at the same premises 22c. In addition, there could be different numbers of associated peripherals for any of the systems shown or described above. Furthermore, a given location 20 could comprise at least one or each of: systems or standalone devices configured to receive, process and action the response request form the hub 10, systems or standalone devices that are not operable to receive, process and action the response request form the hub 10, and any combinations thereof. Furthermore, any of the systems present at a given location 20 may comprise pre-installed peripherals that are wakeable on demand and operable to respond to the response request, or that are not wakeable on demand or otherwise not operable to respond to the response request, or any combination threeof. As such, Figures 1 and 2 are only used to explain some example scenarios of pre-installed systems and stand-alone devices and how they affect the activity on each channel determined by the hub 10 and are not intended to be definitive.

Figure 3 shows an example of communications between the hub 10 for which channel selection is to be performed, and a pre-installed hub (such as pre-installed hub 140 of Figures 1 and 2) and a wakeable pre-installed peripheral (such as peripherals 145a and 145b of Figures 1 and 2) that are associated with the pre-installed hub 140. The pre-installed hub 140 and the pre-installed peripherals 145a, 145b communicate using wireless communications channel ch3 from among the plurality of wireless communications channels ch1 to ch5 that could be used by the hub 10. The pre-installed hub 140 in this example is configured to receive, process and action the response request from the hub 10 and the associated pre-installed peripherals 145a, 145b are wakeable on demand from the pre-installed hub 140 responsive to the response request from the hub 10 to transmit responses over a transmission period that overlaps with the listening period.

The communications illustrated in Figure 3 are implemented by the hub 10 as part of a channel selection process for selecting one or more wireless communication channels that the hub 10 will select and use for communications with its associated peripherals 15a-15c from amongst the plurality of wireless communications channels ch1-ch5 on which the hub 10 can selectively communicate. The channel selection process may be performed on installation of the system 5, or periodically or on demand, e.g. responsive to an associated input by a user or installer.

Upon instigation of the channel selection process, the hub 10 is configured to transmit a response request for at least one or any device receiving the response request to transmit a response over a listening period. In this particular example, the response request comprises a plurality of response request signals ch1req - ch5req respectively transmitted over different communication channels of the wireless communications channels ch1-ch5 on which the hub 10 can selectively communicate. A noise request signal ch1req - ch5req is transmitted at least once on each of the wireless communications channels of the plurality of wireless communications channels ch1-ch5 upon which the hub 10 can selectively transmit. That is, response request signal ch1request is transmitted over channel ch1 at least once, and response request signal ch2request is transmitted over channel ch2 at least once, and so on. As such, regardless of which of the channels an already installed system is operating on, it will hear the response request. Whilst in this example, the response request signals ch1req - ch5req are transmitted sequentially one communications channel at a time, in other examples two or more or all of the response request signals ch1req - ch5req can be transmitted simultaneously if the hub has the appropriate transmission hardware to do so (e.g. multiple transmitters).

Optionally, as in the example illustrated in Figure 3, the response request comprises transmitting each of the respective response request signals ch1req - ch5req for each of the channels ch1-ch5 and then re-transmitting the response request signals ch1req - ch5req for each of the channels ch1-ch5 one or more times. In this way, as shown in Figure 3, if the pre-installed hub 140 is busy when the response request signal is transmitted on the appropriate wireless communications channel (ch3 in this example), e.g. if the pre-installed hub 140 is transmitting at the time so that it can't receive and process the response request signal, then the pre-installed hub 140 may receive one of the later repeat transmissions of the response request signal on the appropriate wireless transmission channel (i.e. ch3 in this example). In other embodiments however, other sequences of transmitting the response request signals may be implemented, such as transmitting each of a plurality of response request signals for one channel and then proceeding to transmit each of a plurality of response request signals for another channel, and so on. Further, the response request signals for the respective channels may be transmitted in any order.

Responsive to receiving and processing the response request signal ch3req on the wireless communication channel ch3, the pre-installed hub 140 signals its associated pre-installed peripherals 145a, 145b that are wakeable on command to also transmit response signals during the transmission period that overlaps the listening period.

The listening period in this example is configured to begin after a determined or pre-determined listening delay period after the transmission of the final response request signal ch5req is transmitted. That is, the listening period follows the transmission of response request signals ch1req-ch5req for all of the channels ch1-ch5. However, in other examples, a listening period for a given wireless communications channel ch1-ch5 may immediately precede a noise request for a different channel. That is, the activity on one channel is evaluated before requesting a response on another channel.

The listening period preferably lasts for at least as long the number of channels ch1-ch5 multiplied by a length of time for listening on each channel ch1-ch5. The length of time for listening to each channel ch1-ch5 could be at least one second, which can be beneficial for receiving transmissions from systems that do not respond to the response request but that are operable to transmit according to a beacon based protocol. For example, the length of time that the hub 10 listens to each channel during the listening period may be in a range from 1 second to 3 seconds. In examples, the total listening period can be 15 seconds or less. Optionally, there may be a wait period after the end of a listening period, and/or other security measures such as the requirement to enter an over-ride passcode or other user verification, before the hub 10 will transmit a subsequent response request. It can be beneficial to limit the listening period to avoid or limit the effect of malicious or unintended use of the response requests. In this way, if the hub 10 received multiple requests to instigate the channel selection process, either in error or due to malicious actions, then the system would still be able to provide its usual services rather than continuously repeating the channel selection process.

Responsive to receiving and processing the relevant response request signal ch3req, the pre-installed hub 140 and its associated pre-installed peripherals 145a, 145b that are wakeable on command start transmitting their response signals on the wireless communications channel that they would ordinarily use during their general intended use operations (i.e. ch3 in this example) after a transmitting delay period to ensure that the response request has completed and to all time for the hub 140 to wake and command each of its wakeable peripherals 145a, 145b. The transmission delay period may be a delay with respect to an end of the response request (i.e. after the last response request signal of the response request). This may for example be achieved by each response request signal including a timestamp identifying a start of the response request, with the duration of the response request being pre-defined or being defined in each response request signal. In this manner different pre-installed systems receiving different response request signals of the response request at different times may synchronize transmission of their response signals to be at the same time at least for a predetermined minimum amount of time. After the expiry of the transmitting delay period, the pre-installed hub 140 and the pre-installed peripherals 145a, 145b had been woken to be commanded by the 140 to transmit response signals then transmit their response signals for a transmission period that is preferably as long or longer than the listening period. The transmissions during the transmission period may comprise a series of transmission activities (e.g. transmitting packets of data) or a continuous transmission activity, but in either case, it is preferable that the transmission activity by each device transmitting a response signal is for a majority, or more preferably all or substantially all, of the transmission period. The transmission period generally corresponds to the listening period, e.g. the transmission period could overlap the listening period but could overlap a majority or all of the listening period.

In this way, the starting of the transmissions by the pre-installed hub 140 and the pre-installed peripherals 145a, 145b that are wakeable on command don't need to be exactly synchronized with the start of the listening period. Indeed, it may be preferable if the transmission delay is different, e.g. shorter, than the listening delay. Furthermore, during the listening period the hub 10 can scan through the channels by listening to each channel ch1-ch5 sequentially (although in any order) and still receive the response signals from the pre-installed hub 140 and the pre-installed peripherals 145a, 145b since the response signals from the pre-installed hub 140 and the pre-installed peripherals 145a, 145b may be transmitted on their given channel over a transmission period that preferably the lasts the whole of the listening period.

That is, after expiry of the listening delay, the hub 10 sequentially listens to each channel of the plurality of channels ch1-ch5 to determine any activity on each channel. In the example illustrated in Figure 3, the hub 10 receives the response signals transmitted by the pre-installed hub 140 and its associated pre-installed peripherals145a, 145b whilst listening on the third wireless communications channel ch3 that is normally used for communications by the pre-installed hub 140 and its associated pre-installed peripherals145a, 145b. These received response signals then form at least part of the activity seen by the hub 10 for the third wireless communications channel ch3. For example, Figure 4 illustrates amplitude vs frequency of the wireless signals incident upon the hub 10 that are transmitted from the preinstalled system 135. As can be seen from that Figure most of the activity (e.g. most of the signal energy) is on channel ch3, but there is a small level of cross-talk resulting also in some activity contributions on neighboring channels ch2 and ch4. These activity contributions may sum on those channels with whatever other activity is seen on those channels at the same time, for example due to: device 165 transmitting on channel ch4, any other systems sending response signals on those channels or providing cross-talk onto those channels (e.g. cross-talk onto channels ch2 and ch4 from system 155 transmitting on channel ch3), and/or any other incidental activity on those channels (e.g. due to system 105 transmitting on channel ch4). System 125, although transmitting a response signal at the same time as systems 135 and 150, transmits its response signal on channel ch1. However, this may provide contribute further cross-talk onto channel 2 that may sum with the cross-talk onto channel ch2 that results from system 135, and potentially also from system 150, transmitting response signals on channel ch3.

After a determined or pre-determined period, the pre-installed hub 140 and its associated pre-installed peripherals145a, 145b stop transmitting the response signals and return to normal operation.

The hub 10 determines the activity received on each of the wireless communications channels ch1-ch5 that it can selectively use to communicate. In examples, the activity could comprise or be based on a received signal strength during the listening period. The received signal strength may be represented as a Received Signal Strength Indicator (RSSI) value. RSSI values are not standardised so may thus depend on the receiver hardware. It may therefore be considered as a relative signal strength measurement. Additionally or alternatively, the received signal strength may be an absolute signal strength measurement, for example a dBm (i.e. decibel-milliwatts) measurement, which is a measure of signal power. The activity characteristic could comprise, be a function of or be based on at least one of: average and peak received signal strength (e.g. RSSI or dBm) during the listening period. In examples, the function is a weighted function of the average and peak of received signal strength are multiplied by a weighting factor and then combined to form the activity characteristic for a given wireless communications channel ch1-ch5. A logarithmic function may be applied to the activity levels as part of this function, which can help avoid over-emphasising short-duration peaks. For example, the function may be equal to (or in other embodiments proportional to): Inverse-log(A.(polarity-of-signal-strength-average).log(abs(signal-strength-average)) + B.(polarity-of-signal-strength-peak).log(abs(signal-strength-peak))) where:
A and B are constants,
signal strength may be a dBM or RSSI signal strength (as long as the selection thereof is consistent),
"polarity of" is +1 or -1, depending on whether the value of the signal strength average or peak (whichever the case may be) is positive or negative respectively, and
abs is a function that determines absolute value.

The log and inverse log functions referred to here have the same base as each other, and so may be for a base of any positive value.

In some embodiments A may be greater than B, e.g. A may be 0.7 while B is 0.3.

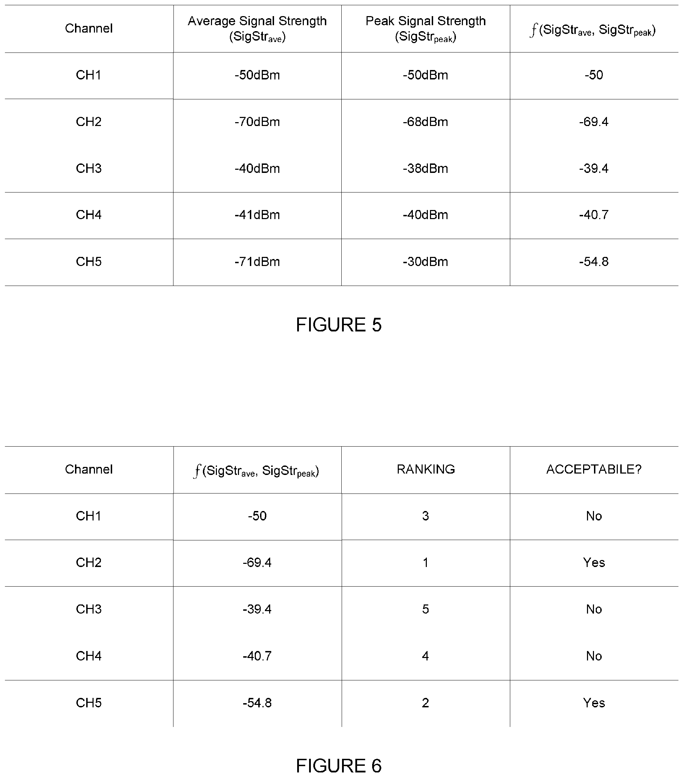

A non-limiting example of activity characterization is illustrated in the table shown in Figure 5, which gives example values of activity on channels ch1-ch5. These values are provided merely as an example of potential activity values in order to help understanding. However, other activity values would be possible depending on the particular arrangement and operation of devices at any given location.

In this example, the average and peak values of received signal strength (in dBm) for each channel are determined and the activity characteristic for a given channel ch1-ch5 is a function (*f*(*SigStrₐᵥₑ, SigStrₚₑₐₖ*)) of both the average and peak values of signal strength for that channel.

In the example of the table shown in Figure 5, third wireless communication channel ch3 has a higher peak signal strength than average signal strength due to sporadic or other transient signals that may have come from any of the third pre-installed peripheral 145c or the fourth pre-installed peripherals 160a-160c or the preinstalled system 105 shown in Figure 2. This is because these peripherals 145c, 160a-160c and this preinstalled system 105 are not capable of responding to the response request but will continue to operate as they normally do, and in this example at least one transient signal is by generated by one or more of them during the listening period. The transient signal(s) are added to the response to the response request that is generated by the hubs 155 and 140 and peripherals 145a and 145b of hub 140 throughout the listening period. The fifth wireless communications channel ch5 has a higher peak signal strength than average signal strength due to the inclusion of coincidental sporadic noise generation from the second standalone device 170 shown in Figure 2. Fourth wireless communications channel ch4 has a slightly higher peak signal strength than average signal strength due to cross talk from the transient noise generated on the third and fifth wireless communications channels ch3, ch5. Second wireless communications channel ch2 also has slightly higher peak signal strength than average signal strength due to cross talk from the transient noise generated on the third wireless communications channel ch3. In contrast, the peak signal strength and average signal strength for the first wireless communications channel ch1 are substantively the same as the first wireless communications channel ch1 is not subject to any transient noise, as all of system 120 respond, throughout the listening period, to the request response.

Figure 6 is a table that illustrates the way in which the activity characteristic for each channel ch1-ch5 could be used, using the example data from the table of Figure 5. In particular, the table shown in Figure 6 illustrates ranking of the channels ch1-ch5 based on the activity characteristics from the table of Figure 5.

The table shown in Figure 6 illustrates exemplary ways in which the determined activity characteristic, such as the exemplary function (*f*(*SigStrₐᵥₑ, SigStrₚₑₐₖ*)) that combines peak signal strength and average signal strength, for each channel may be assessed. For example the wireless communications channels ch1-ch5 can be ranked in order from lowest value of activity characteristic to the highest, and the wireless channels can optionally be preferentially selected or presented to the user for selection according to that ranking. Additionally or alternatively, the values of activity characteristic for each channel can be compared to a threshold, such as a -52 threshold in this example, and only those channels with an activity characteristic lower than the threshold are made available for selection.

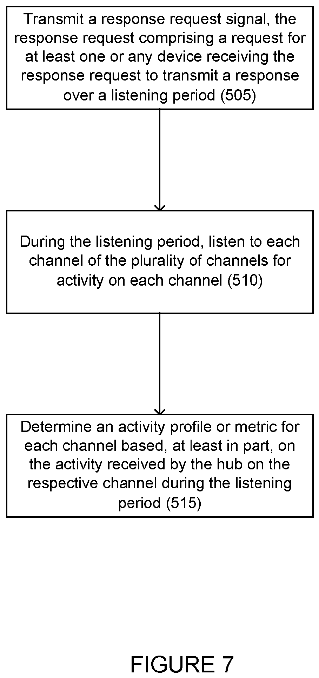

The process for determining the activity characteristic is shown in Figure 7. In step 505 the hub 10 transmits a response request signal, the response request comprising a request for at least one or any system 135 or standalone device receiving the response request to transmit a response over a listening period. During the listening period, in step 510, the hub 10 listens to each channel of the plurality of channels for activity on each channel. Then, in step 515, the hub 10 determines an activity characteristic for each channel based, at least in part, on the activity received by the hub 10 on the respective channel during the listening period.

The measured activity or the activity characteristic derived therefrom can be used to identify and optionally select the wireless communication channel or channels from amongst the plurality of channels that can be used by the hub 10 and its associated peripherals 15a-15c to communicate. This may be done in any of a variety of ways. For example, the hub 10 could automatically identify, select and use the wireless communications channel from amongst the plurality of wireless communications channels ch1-ch5 having the lowest activity characteristic during the listening period. All subsequent communications between the hub 10 and its associated peripherals 15a-15c could then be via the selected communications channel ch1-ch5. In another example, the hub 10 could automatically identify, select and use any wireless communications channel from amongst the plurality of wireless communications channels ch1-ch5 for which the activity characteristic during the listening period is less than a set or pre-set activity threshold. Optionally the wireless communications channel or channels selected and used could be selected using the activity characteristic for that channel in combination with one or more other criteria or additional metric. For example, the hub 10 could identify any wireless communications channel from amongst the plurality of wireless communications channels ch1-ch5 for which the activity characteristic during the listening period is less than a set or pre-set activity threshold, and then the one or more other criteria or additional metric could be applied to select which of the identified wireless communications channels should be selected and used by the system 5 for wireless communications. In examples, the criteria could identify a preference or order of wireless communications channels. For example, where there is more than one viable channel and the viable channels have equally acceptable activity levels, a predetermined order may prevail (e.g. lower numbered channels first, or any other predetermined preferential order). Optionally, the criteria could specify a preference based on energy consumption associated with operating the receiver for the channel, the frequency of the channel, channels previously selected and/or how long since a channel was last selected (e.g. to preferentially select or avoid more recently used channels), and/or the like. Examples of additional metrics comprise at least one of: data capacity of each channel, the number of devices communicating using each channel, security level or relative security of each channel, a type of data being communicated using the channel, a set or pre-set channel preference, an encryption level or standard of each channel, and/or the like. However, it will be appreciated that other criteria or additional metrics could be used. In view of the above, in some examples, other factors can be taken into account for channel selection in addition to activity levels on each channel ch1-ch5.

In some examples, the wireless channel selection need not be fully automated, and the activity determined, and/or identification of the channel, by the hub 10 could be instead used to inform a user of the suitability of wireless communication channels ch1-ch5 and give the user the option to select a wireless communication channel from amongst the plurality of possible wireless communication channels ch1-ch5 for communication by the system 5 having been informed of the suitability of the channel. For example, the activity during the listening period measured for each channel ch1-ch5, or a metric or graphical representation indicative thereof, could be provided to a user by the hub 10. This could be provided, for example, on a display of the hub 10. Alternatively or additionally, this could be provided by the hub 10 transmitting the measured activity or metric or graphical representation indicative thereof to at least one or each of: a control unit of the system 5 that is separate from the hub 10, a user device such as a mobile phone or tablet for display, a server for provision through a client web-portal, and/or the like. Additionally or alternatively, the wireless communications channel or channels identified by the hub 10, e.g. the channel or channels having the lowest activity characteristic or those below a set or pre-set activity threshold, could be provided to the user. For example, the wireless communications channels ch1-ch5 that are made available to the user for selection could be limited to those identified by the hub 10. In another example, the wireless communications channels identified by the hub 10 could be highlighted, or preferentially or more prominently displayed, or the wireless communications channels could be ordered, ranked or preferentially or more prominently displayed based on the activity during the listening period determined by the hub 10 with those wireless communications channels ch1-ch5. In this case, those channels ch1-ch5 having a lower activity would be ranked and/or ordered higher, or more prominently or preferentially displayed, or the like.

In any event, the hub 10 can be configured to receive a selection by the user of a wireless communication channel from the plurality of wireless communications channels ch1-ch5. This could be provided via at least one or any of: the user interface provided on the hub 10, an app running on the user device, the web or other client portal, the control unit that is separate from the hub, and/or the like.

In this way, either the hub 10 can automatically identify, select and use a wireless communication channel or channels from amongst the plurality of wireless communications channels ch1-ch5 that has a preferable or beneficial lack of activity. Additionally or alternatively, the hub 10 can inform, assist and/or guide a user to select a wireless communication channel or channels from amongst the plurality of wireless communications channels ch1-ch5, that has a preferable or beneficial lack of activity.

Regardless of which approach is used, wireless communication can be improved in that a wireless communication channel ch1-ch5 can be selectively used by the system 5 that is less subject to interference from other pre-installed systems and/or interferes less with wireless communications of pre-installed systems. Due to the hub 10 being configured to transmit the response request for at least one or any device receiving the signal to transmit a response over a listening period, the determination of potential activity for each channel ch1-ch5 determined by the hub 10 can be improved. This in turn can improve the selection of wireless communication channel ch1-ch5 and thereby improve the interference arising from, and/or due to, wireless communications by the system 5 in its normal use when communicating between the hub 10 and its associated peripherals 15a-15c.

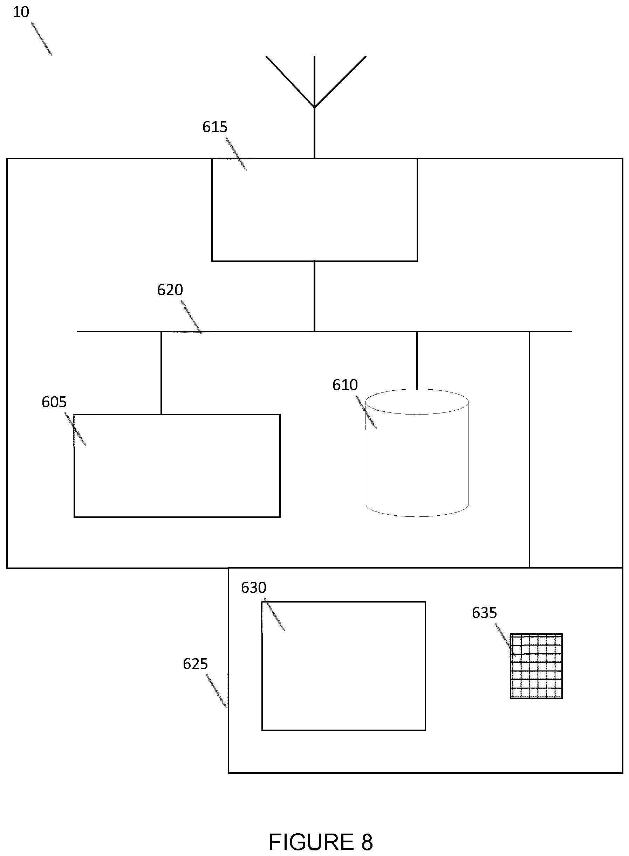

Figure 8 shows an example of the hub 10 that could be used in the system 5 whose operation is described above. The hub 10 in this example comprises a processing system 605, data storage 610 and a wireless communications system 615, all linked by one or more data busses 620. The wireless communications system 615 is configured to selectively communicate on any of the plurality of wireless communications channels ch1-ch5, to thereby transmit the response request signals ch1req-ch5req comprised in the response request and to receive any activity on any of the channels ch1-ch5 during the listening period. The wireless communications system 615 is also configured to wirelessly communicate with one or more peripherals (not shown in Figure 8) of the system 5. For example, the hub 10 could be the hub of a security system. In such a case the peripherals could for example include one or more motion sensors and/or one or more action devices such as alarm sounders or deterrent devices such as fog generators that are operable responsive to detection of motion by the one or more motion sensors. In another example, the hub 10 could be the hub of a home automation system, and the peripherals could be peripheral devices commonly connected as part of a home automation system such as but not limited to one or more of: heating and/or cooling system controllers, smart lighting, video cameras, intercom systems, personal assistant devices, and/or the like. Depending on the peripheral and type of system, the hub 10 is operable to control the peripheral to perform an action and/or receive data or other output from the peripheral.

The processing system 605 is configured to perform the method described above with reference to Figure 7. The processing system 605 is configured to control the wireless communications system 615 to transmit the response request. The processing system 605 also receives signals indicative of the activity on each wireless communication channel ch1-ch5 from the wireless communication system 615. In this way, the processing system 605 is operable to determine the activity on each wireless communication channel ch1-ch5 during the listening period and optionally to identify a subset comprising one or more of the wireless communication channels ch1-ch5 for wireless communication using the approaches discussed above in relation to Figures 1 to 7.

Optionally, the hub 10 also comprises a user interface 625. In this example, the user interface 625 is integral with the hub 10 and physically connected to the processing system 605, for example via the one or more data busses 620. However, in other examples, the user interface could be separate from the hub 10 and configured to wireless communicate with it. In examples, the user interface could be provided on a user device such as a mobile phone or tablet that directly or indirectly communicates with the hub 10. In other examples, the user interface is provided in a client portal, such as a web-portal, implemented by a server or the like. However, other suitable mechanisms for providing a user interface could be used.

The user interface 625 comprises at least one output device 630 such as a display or an audio device, and at least one user input device 635 such as a keypad, buttons, trackball or the like. Optionally, the output device 630 and the user input device 635 are combined, e.g. as a touchscreen. The output device 630 is operable responsive to the processing system 605 as described above. For example, the output device 630 can be operable to provide an indication of the activity on each wireless communications channel ch1-ch5 during the listening period or to provide an indication of the wireless communication channel or channels ch1-ch5 identified by the hub 10, e.g. the wireless communication channels identified as being below the activity threshold or having the determined lowest activity. The user input device 635 is operable to receive the selection of the wireless communications channel ch1-ch5 from the user and convey that selection to the processing system 605 to implement the selection.

The above examples are provided by way of illustrating how the invention might be put into practice, but other implementations could be provided that fall within the scope of the claims.

For example, although examples with five wireless communications channels ch1-ch5 are given, in practice any number of wireless communications channels that constitute a plurality of channels could be used. Furthermore, although specific examples are given of pre-installed systems and standalone devices that are configured to receive and action the response request, e.g. with a hub and all peripherals or with only the hub and some or none of the peripherals, and pre-installed systems and standalone devices that do not receive and action the response request, any combination of these and any number of different pre-installed systems could be present.

In addition, although examples are given in which the hub 10 implements the response request by sequentially sending the response request signals ch1req-ch5req on different channels, one or more or each of the response request signals ch1req-ch5req could be sent simultaneously. Furthermore, although in the example of Figure 3 the response request comprises transmitting a response request signal ch1req-ch5req twice on each channel, the response request could instead comprise transmitting a response request signal ch1req-ch5req once or more than twice on each channel. Similarly, in the example of Figure 3 the response comprises multiple response signals being transmitted over the entirety of the listening period, in alternative possibilities, the response may comprise transmission of other numbers of response signals, including one, two or more response signals. Further, the response could be transmitted during only part, or a plurality of parts, of the listening period rather than throughout the entire listening period. Although sequential listening on each channel ch1-ch5 is shown, simultaneous listening on two or more or all channels could be used, for example if there are multiple receivers.

Method steps of the invention can be performed by one or more programmable processors executing a computer program to perform functions of the invention by operating on input data and generating output. Method steps can also be performed by special purpose logic circuitry, e.g., an FPGA (field programmable gate array) or an ASIC (application-specific integrated circuit) or other customised circuitry. Processors suitable for the execution of a computer program include CPUs and microprocessors, and any one or more processors. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g. EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a device having a screen, e.g., a CRT (cathode ray tube), plasma, LED (light emitting diode) or LCD (liquid crystal display) monitor, for displaying information to the user and an input device, e.g., a keyboard, touch screen, a mouse, a trackball, and the like by which the user can provide input to the computer. Other kinds of devices can be used, for example, feedback provided to the user can be any form of sensory feedback, e.g., visual feedback, auditory feedback, or tactile feedback; and input from the user can be received in any form, including acoustic, speech, or tactile input.

## Claims

1. A hub (10) configured for selective wireless communication over any channel of a plurality of wireless communication channels, the hub (10) being configured to:
transmit a response request, the response request comprising a request for at least one or any device receiving and processing at least part of the response request to transmit a response over a listening period;
during the listening period, listen to each channel of the plurality of channels; and
determine an activity characteristic for each channel based, at least in part, on activity received by the hub (10) on the respective channel during the listening period

2. The hub according to claim 1, wherein the activity comprises one or more responses transmitted responsive to at least part of the response request.

3. The hub according to any preceding claim, wherein the activity received on the respective channel during the listening period is activity that would subsequently be treated as noise by the hub during normal use of the hub.

4. The hub according to any preceding claim configured to identify a selection of at least one of the channels out of the plurality of wireless communication channels for wireless communication based, at least in part, on the activity characteristic for each channel.

5. The hub according to claim 4, wherein
the hub is configured to automatically selectively use the identified channel or channels for subsequent communications with its associated peripherals; and/or
the hub is configured to provide or output to a user at least one or each of:
an indication of the identified channel or channels;
an indication of the activity characteristic for one or more or each of the plurality of channels;
the channels displayed preferentially or selectively according to the activity characteristic; wherein
the hub is configured to subsequently receive from the user a selection of the communication channel to be used for communication; and thereafter
selectively use the selected channel or channels for subsequent communications with its associated peripherals.

6. The hub according to any preceding claim, wherein
the at least one activity characteristic for a given wireless communication channel comprises or is indicative of at least one of:
average received signal strength;
peak received signal strength; and/or
accumulated signal strength;
or
the at least one activity characteristic comprises or is indicative of a weighted sum or other weighted combination of at least two or more of: average received signal strength, peak received signal strength over at least part or all of the listening period.

7. The hub of claim 6 when dependent on claim 4 or any claim dependent on claim 4, wherein the identification of the selection of the at least one of the channels of the plurality of wireless communication channels comprises one of:
identifying the selection of the at least one of the channels of the plurality of wireless communication channels having an activity characteristic indicative of and/or derived from one or more of: lowest average received signal strength, lowest peak received signal strength;
or
identifying the selection of the at least one of the channels of the plurality of wireless communication channels for wireless communication from amongst any of the plurality of wireless communication channels for which the activity characteristic indicates activity below a threshold measure of activity.

8. The hub of claim 4 or any claim dependent thereon, wherein the hub is configured to identify the selection of the at least one of the channels of the plurality of wireless communication channels for wireless communication based in part on the activity characteristic for each channel and in part using at least one additional metric.

9. The hub according to any preceding claim, configured to transmit at least part of the response request at least once on each of the channels; and optionally wherein the response request comprises a plurality of response request signals and the hub is configured to transmit a response request signal of the plurality of response request signals a plurality of times on each of the wireless communications channels.

10. The hub according to any preceding claim, wherein
the hub is configured to transmit the response request by transmitting response request signals for all of the plurality of wireless communications channels before the listening period; and/or
the response request is configured to cause the at least one or any device receiving and processing at least part of the response request to transmit a response for most or all of the listening period.

11. The hub according to claim 2 or any claim dependent thereon, wherein the request comprised in the response request is a request for devices that receive and process the response request and transmit the response at a maximum predefined power.

12. A system that comprises a first hub (10), the first hub (10) being or comprising the hub (10) of any of claims 1 to 11, the system further comprising a second hub (125) and a plurality of associated peripherals associated with the second hub (125), wherein the second hub (125) has a transceiver configured for wirelessly communicating with the second hub's (125) associated peripherals (139a, 130b, 130c) on a channel of the plurality of wireless communication channels, the second hub (125) being configured so that the transceiver of the second hub (125) can also receive and process at least part of the response request from the first hub (10), wherein, in response to receiving and processing the at least part of the response request, the second hub (125) is configured to:
during a response generating period, transmit a response on the channel to the first hub (10).

13. The system of claim 12, wherein:
the second hub is configured to, in response to receiving and processing the at least part of the response request, control or otherwise request at least one or all of its associated peripherals to transmit a response on the channel to the first hub during the response generating period; and/or
the system further comprises a third hub and at least one further peripheral associated with the third hub, the third hub comprising a transceiver configured for wirelessly communicating with the at least one further peripheral associated with the third hub on a channel, so that the third hub can also receive and process the response request from the first hub, wherein in response to receiving and processing the response request the third hub is configured to: during the response generating period, transmit a response on the channel to the first hub.

14. A method for use in selective wireless communication over any channel of a plurality of wireless communication channels, the method comprising:
transmitting (505), a response request, the response request comprising a request for at least one or any device receiving and processing at least part of the response request to transmit a response over a listening period;
during the listening period, listening (510) to each channel of the plurality of channels and
determining (515) an activity characteristic for each channel based, at least in part, on the activity received on the respective channel during the listening period.

15. A non-transient computer readable carrier medium comprising a computer program product configured such that, when implemented on a hub that is configured for selective wireless communication over any channel of a plurality of wireless communication channels, causes the hub to:
transmit, a response request, the response request comprising a request for at least one or any device receiving and processing at least part of the response request to transmit a response over a listening period;
during the listening period, listen to each channel of the plurality of channels; and
determine an activity characteristic for each channel based, at least in part, on the activity received on the respective channel during the listening period.

## Patentansprüche

1. Sternverteiler (10), konfiguriert für selektive drahtlose Kommunikation über einen beliebigen Kanal einer Vielzahl von drahtlosen Kommunikationskanälen, wobei der Sternverteiler (10) konfiguriert ist zum:
Übertragen einer Antwortanforderung, wobei die Antwortanforderung eine Anforderung für mindestens ein oder ein beliebiges Gerät, das mindestens einen Teil der Antwortanforderung empfängt und verarbeitet, zum Übertragen einer Antwort über eine Abhörperiode umfasst;
Abhören, während der Abhörperiode, jedes Kanals der Vielzahl von Kanälen; und
Bestimmen einer Aktivitätscharakteristik für jeden Kanal mindestens teilweise auf der Basis von einer während der Abhörperiode auf dem jeweiligen Kanal von dem Sternverteiler (10) empfangenen Aktivität.

2. Sternverteiler nach Anspruch 1, wobei die Aktivität eine oder mehrere Antworten umfasst, die als Reaktion auf mindestens einen Teil der Antwortanforderung übertragen werden.

3. Sternverteiler nach einem vorhergehenden Anspruch, wobei die auf dem jeweiligen Kanal während der Abhörperiode empfangene Aktivität eine Aktivität ist, die anschließend von dem Sternverteiler während einer normalen Verwendung des Sternverteilers als Rauschen behandelt werden würde.

4. Sternverteiler nach einem vorhergehenden Anspruch, der zum Identifizieren einer Auswahl von mindestens einem der Kanäle aus der Vielzahl von drahtlosen Kommunikationskanälen für drahtlose Kommunikation mindestens teilweise auf der Basis der Aktivitätscharakteristik für jeden Kanal konfiguriert ist.

5. Sternverteiler nach Anspruch 4, wobei
der Sternverteiler zum automatischen selektiven Verwenden der ein oder mehreren identifizierten Kanäle für anschließende Kommunikationen mit seinen assoziierten Peripheriegeräten konfiguriert ist; und/oder
der Sternverteiler zum Bereitstellen oder Ausgeben für einen Benutzer mindestens eines oder jedes von Folgenden konfiguriert ist:
einer Angabe der ein oder mehreren identifizierten Kanäle;
einer Angabe der Aktivitätscharakteristik für einen oder mehrere oder jeden der Vielzahl von Kanälen;
den Kanälen, die bevorzugt oder selektiv gemäß der Aktivitätscharakteristik angezeigt werden; wobei
der Sternverteiler zum anschließenden Empfangen einer Auswahl des für eine Kommunikation zu verwendenden Kommunikationskanals vom Benutzer konfiguriert ist; und danach
selektiven Verwenden der ein oder mehreren ausgewählten Kanäle für nachfolgende Kommunikationen mit seinen assoziierten Peripheriegeräten.

6. Sternverteiler nach einem vorhergehenden Anspruch, wobei
die mindestens eine Aktivitätscharakteristik für einen gegebenen drahtlosen Kommunikationskanal mindestens eines von Folgenden umfasst oder dafür indikativ ist:
durchschnittlicher Empfangssignalstärke;
maximaler Empfangssignalstärke; und/oder
akkumulierter Signalstärke;
oder
die mindestens eine Aktivitätscharakteristik eine gewichtete Summe oder eine andere gewichtete Kombination von mindestens zwei oder mehr von durchschnittlicher Empfangssignalstärke, maximaler Empfangssignalstärke über mindestens einen Teil oder die gesamte Abhörperiode umfasst oder dafür indikativ ist.

7. Sternverteiler nach Anspruch 6, wenn abhängig von Anspruch 4 oder einem von Anspruch 4 abhängigen Anspruch, wobei das Identifizieren der Auswahl des mindestens einen der Kanäle der Vielzahl von drahtlosen Kommunikationskanälen eines umfasst von:
dem Identifizieren der Auswahl des mindestens einen der Kanäle der Vielzahl von drahtlosen Kommunikationskanälen mit einer Aktivitätscharakteristik, die für eines oder mehrere von niedrigster durchschnittlicher Empfangssignalstärke, niedrigster maximaler Empfangssignalstärke indikativ und/oder davon abgeleitet ist;
oder
dem Identifizieren der Auswahl des mindestens einen der Kanäle der Vielzahl von drahtlosen Kommunikationskanälen für drahtlose Kommunikation aus beliebigen der Vielzahl von drahtlosen Kommunikationskanälen, für die die Aktivitätscharakteristik eine Aktivität unterhalb eines Aktivitätsschwellenmesswerts angibt.

8. Sternverteiler nach Anspruch 4 oder einem davon abhängigen Anspruch, wobei der Sternverteiler zum Identifizieren der Auswahl des mindestens einen der Kanäle der Vielzahl von drahtlosen Kommunikationskanälen für drahtlose Kommunikation teilweise auf der Basis der Aktivitätscharakteristik für jeden Kanal und teilweise anhand von mindestens einer zusätzlichen Metrik konfiguriert ist.

9. Sternverteiler nach einem vorhergehenden Anspruch, der zum Übertragen mindestens eines Teils der Antwortanforderung mindestens einmal auf jedem der Kanäle konfiguriert ist; und wobei die Antwortanforderung optional eine Vielzahl von Antwortanforderungssignalen umfasst und der Sternverteiler zum Übertragen eines Antwortanforderungssignals der Vielzahl von Antwortanforderungssignalen eine Vielzahl von Malen auf jedem der drahtlosen Kommunikationskanäle konfiguriert ist.

10. Sternverteiler nach einem vorhergehenden Anspruch, wobei
der Sternverteiler zum Übertragen der Antwortanforderung durch Übertragen von Antwortanforderungssignalen für alle der Vielzahl von drahtlosen Kommunikationskanälen vor der Abhörperiode konfiguriert ist; und/oder
die Antwortanforderung konfiguriert ist zum Bewirken, dass das mindestens eine oder ein beliebiges Gerät, das mindestens einen Teil der Antwortanforderung empfängt und verarbeitet, eine Antwort für den größten Teil oder die gesamte Abhörperiode überträgt.

11. Sternverteiler nach Anspruch 2 oder einem davon abhängigen Anspruch, wobei die in der Antwortanforderung umfasste Anforderung eine Anforderung für Geräte ist, die die Antwortanforderung empfangen und verarbeiten und die Antwort mit einer maximalen vordefinierten Leistung übertragen.

12. System, das einen ersten Sternverteiler (10) umfasst, wobei der erste Sternverteiler (10) der Sternverteiler (10) nach einem der Ansprüche 1 bis 11 ist oder diesen umfasst, wobei das System ferner einen zweiten Sternverteiler (125) und eine Vielzahl von assoziierten Peripheriegeräte umfasst, die mit dem zweiten Sternverteiler (125) assoziiert sind, wobei der zweite Sternverteiler (125) einen Sendeempfänger aufweist, der für drahtlose Kommunikation mit den assoziierten Peripheriegeräten (139a, 130b, 130c) des zweiten Sternverteilers (125) auf einem Kanal der Vielzahl von drahtlosen Kommunikationskanälen konfiguriert ist, wobei der zweite Sternverteiler (125) so konfiguriert ist, dass der Sendempfänger des zweiten Sternverteilers (125) auch mindestens einen Teil der Antwortanforderung vom ersten Sternverteiler (10) empfangen und verarbeiten kann,
wobei der zweite Sternverteiler (125) als Reaktion auf den Empfang und die Verarbeitung des mindestens einen Teils der Antwortanforderung konfiguriert ist zum:
Übertragen, während einer Antworterzeugungsperiode, einer Antwort auf dem Kanal an den ersten Sternverteiler (10).

13. System nach Anspruch 12, wobei:
der zweite Sternverteiler konfiguriert ist zum Steuern oder anderweitigen Auffordern, als Reaktion auf den Empfang und die Verarbeitung des mindestens einen Teils der Antwortanforderung, mindestens eines oder aller seiner assoziierten Peripheriegeräte, während der Antworterzeugungsperiode eine Antwort auf dem Kanal an den ersten Sternverteiler zu übertragen; und/oder
das System ferner einen dritten Sternverteiler und mindestens ein mit dem dritten Sternverteiler assoziiertes weiteres Peripheriegerät umfasst, wobei der dritte Sternverteiler einen Sendempfänger umfasst, der für drahtlose Kommunikation mit dem mindestens einen weiteren mit dem dritten Sternverteiler assoziierten Peripheriegerät auf einem Kanal konfiguriert ist, so dass der dritte Sternverteiler auch die Antwortanforderung vom ersten Sternverteiler empfangen und verarbeiten kann, wobei der dritte Sternverteiler als Reaktion auf den Empfang und die Verarbeitung der Antwortanforderung konfiguriert ist zum: Übertragen, während der Antworterzeugungsperiode, einer Antwort auf dem Kanal an den ersten Sternverteiler.

14. Verfahren zur Verwendung bei selektiver drahtloser Kommunikation über einen beliebigen Kanal aus einer Vielzahl von drahtlosen Kommunikationskanälen, wobei das Verfahren Folgendes umfasst:
Übertragen (505) einer Antwortanforderung, wobei die Antwortanforderung eine Anforderung für mindestens ein oder ein beliebiges Gerät, das mindestens einen Teil der Antwortanforderung empfängt und verarbeitet, zum Übertragen einer Antwort über eine Abhörperiode umfasst;
Abhören (510), während der Abhörperiode, jedes Kanals der Vielzahl von Kanälen; und
Bestimmen (515) einer Aktivitätscharakteristik für jeden Kanal mindestens teilweise auf der Basis der während der Abhörperiode auf dem jeweiligen Kanal empfangenen Aktivität.

15. Nichtflüchtiges computerlesbares Trägermedium, das ein Computerprogrammprodukt umfasst, das so konfiguriert ist, dass es bei Implementierung auf einem Sternverteiler, der für selektive drahtlose Kommunikation über einen beliebigen Kanal aus einer Vielzahl von drahtlosen Kommunikationskanälen konfiguriert ist, den Sternverteiler veranlasst zum:
Übertragen einer Antwortanforderung, wobei die Antwortanforderung eine Anforderung für mindestens ein oder ein beliebiges Gerät umfasst, das mindestens einen Teil der Antwortanforderung empfängt und verarbeitet, zum Übertragen einer Antwort über eine Abhörperiode;
Abhören, während der Abhörperiode, jedes Kanals der Vielzahl von Kanälen; und
Bestimmen einer Aktivitätscharakteristik für jeden Kanal mindestens teilweise auf der Basis der während der Abhörperiode auf dem jeweiligen Kanal empfangenen Aktivität.

## Revendications

1. Concentrateur (10) configuré pour une communication sans fil sélective sur un quelconque canal d'une pluralité de canaux de communication sans fil, le concentrateur (10) étant configuré pour :
transmettre une demande de réponse, la demande de réponse comprenant une demande pour au moins un ou tout dispositif recevant et traitant au moins une partie de la demande de réponse pour transmettre une réponse au cours d'une période d'écoute ;
pendant la période d'écoute, écouter chaque canal de la pluralité de canaux ; et
déterminer une caractéristique d'activité pour chaque canal sur la base, au moins en partie, d'une activité reçue par le concentrateur (10) sur le canal respectif pendant la période d'écoute.

2. Concentrateur selon la revendication 1, dans lequel l'activité comprend une ou plusieurs réponses transmises en réaction à au moins une partie de la demande de réponse.

3. Concentrateur selon l'une quelconque des revendications précédentes, dans lequel l'activité reçue sur le canal respectif pendant la période d'écoute est une activité qui serait ensuite traitée comme du bruit par le concentrateur pendant une utilisation normale du concentrateur.

4. Concentrateur selon l'une quelconque des revendications précédentes configuré pour identifier une sélection d'au moins un des canaux parmi la pluralité de canaux de communication sans fil pour une communication sans fil basée, au moins en partie, sur la caractéristique d'activité pour chaque canal.

5. Concentrateur selon la revendication 4, dans lequel
le concentrateur est configuré pour utiliser automatiquement de manière sélective les un ou plusieurs canaux sélectionnés pour des communications ultérieures avec ses périphériques associés ; et/ou
le concentrateur est configuré pour fournir ou émettre en sortie à un utilisateur au moins un ou chacun des éléments suivants :
une indication des un ou plusieurs canaux identifiés ;
une indication de la caractéristique d'activité pour un ou plusieurs ou chacun de la pluralité de canaux ;
les canaux affichés de manière préférentielle ou sélective selon la caractéristique d'activité ; dans lequel
le concentrateur est configuré pour recevoir ultérieurement de l'utilisateur une sélection du canal de communication à utiliser pour une communication ; et ensuite
utiliser sélectivement les un ou plusieurs canaux sélectionnés pour des communications ultérieures avec ses périphériques associés.

6. Concentrateur selon l'une quelconque des revendications précédentes, dans lequel
l'au moins une caractéristique d'activité pour un canal de communication sans fil donné comprend ou est indicative d'au moins un des éléments suivants :
l'intensité moyenne du signal reçu ;
l'intensité maximale du signal reçu ; et/ou
l'intensité cumulée du signal ;
ou
l'au moins une caractéristique d'activité comprend ou est indicative d'une somme pondérée ou d'une autre combinaison pondérée d'au moins deux ou plus de : l'intensité moyenne du signal reçu, l'intensité maximale du signal reçu sur au moins une partie ou la totalité de la période d'écoute.

7. Concentrateur selon la revendication 6 lorsqu'elle dépend de la revendication 4 ou toute revendication dépendant de la revendication 4, dans lequel l'identification de la sélection de l'au moins un des canaux de la pluralité de canaux de communication sans fil comprend l'un parmi :
l'identification de la sélection de l'au moins un des canaux de la pluralité de canaux de communication sans fil ayant une caractéristique d'activité indicative de et/ou dérivée d'un ou plusieurs des éléments suivants : intensité moyenne du signal reçu la plus faible, intensité maximale du signal reçu la plus faible ;
ou
l'identification de la sélection de l'au moins un des canaux de la pluralité de canaux de communication sans fil pour une communication sans fil parmi de quelconques canaux parmi la pluralité de canaux de communication sans fil pour lesquels la caractéristique d'activité indique une activité inférieure à une mesure de seuil d'activité.

8. Concentrateur selon la revendication 4 ou toute revendication qui en dépend, dans lequel le concentrateur est configuré pour identifier la sélection de l'au moins un des canaux de la pluralité de canaux de communication sans fil pour une communication sans fil basée en partie sur la caractéristique d'activité pour chaque canal et en partie en utilisant au moins une métrique supplémentaire.

9. Concentrateur selon l'une quelconque des revendications précédentes, configuré pour transmettre au moins une partie de la demande de réponse au moins une fois sur chacun des canaux ; et facultativement dans lequel la demande de réponse comprend une pluralité de signaux de demande de réponse et le concentrateur est configuré pour transmettre un signal de demande de réponse de la pluralité de signaux de demande de réponse une pluralité de fois sur chacun des canaux de communication sans fil.

10. Concentrateur selon l'une quelconque des revendications précédentes, dans lequel
le concentrateur est configuré pour transmettre la demande de réponse en transmettant des signaux de demande de réponse pour l'ensemble de la pluralité de canaux de communication sans fil avant la période d'écoute ; et/ou
la demande de réponse est configurée pour amener l'au moins un ou tout dispositif qui reçoit et traite au moins une partie de la demande de réponse à transmettre une réponse pendant la majeure partie ou la totalité de la période d'écoute.

11. Concentrateur selon la revendication 2 ou toute revendication qui en dépend, dans lequel la demande comprise dans la demande de réponse est une demande de dispositifs qui reçoivent et traitent la demande de réponse et transmettent la réponse à une puissance maximale prédéfinie.

12. Système qui comprend un premier concentrateur (10), le premier concentrateur (10) étant ou comprenant le concentrateur (10) selon l'une quelconque des revendications 1 à 11, le système comprenant en outre un deuxième concentrateur (125) et une pluralité de périphériques associés au deuxième concentrateur (125), dans lequel le deuxième concentrateur (125) comporte un émetteur-récepteur configuré pour communiquer sans fil avec les périphériques (139a, 130b, 130c) associés du deuxième concentrateur (125) sur un canal de la pluralité de canaux de communication sans fil, le deuxième concentrateur (125) étant configuré pour que l'émetteur-récepteur du deuxième concentrateur (125) puisse également recevoir et traiter au moins une partie de la demande de réponse provenant du premier concentrateur (10),
dans lequel, en réaction à la réception et au traitement de l'au moins une partie de la demande de réponse, le deuxième concentrateur (125) est configuré pour :
pendant une période de génération de réponse, transmettre une réponse sur le canal au premier concentrateur (10).

13. Système selon la revendication 12, dans lequel :
le deuxième concentrateur est configuré pour, en réaction à la réception et au traitement de l'au moins une partie de la demande de réponse, commander ou demander autrement à au moins un ou tous de ses périphériques associés de transmettre une réponse sur le canal au premier concentrateur pendant la période de génération de réponse ; et/ou
le système comprend en outre un troisième concentrateur et au moins un autre périphérique associé au troisième concentrateur, le troisième concentrateur comprenant un émetteur-récepteur configuré pour communiquer sans fil avec l'au moins un autre périphérique associé au troisième concentrateur sur un canal, de sorte que le troisième concentrateur peut également recevoir et traiter la demande de réponse du premier concentrateur, dans lequel, en réaction à la réception et au traitement de la demande de réponse, le troisième concentrateur est configuré pour : pendant la période de génération de réponse, transmettre une réponse sur le canal au premier concentrateur.

14. Procédé à utiliser dans une communication sans fil sélective sur un quelconque canal d'une pluralité de canaux de communication sans fil, le procédé comprenant :
la transmission (505), d'une demande de réponse, la demande de réponse comprenant une demande pour au moins un ou tout dispositif recevant et traitant au moins une partie de la demande de réponse pour transmettre une réponse au cours d'une période d'écoute ;
pendant la période d'écoute, l'écoute (510) de chaque canal de la pluralité de canaux ; et
la détermination (515) d'une caractéristique d'activité pour chaque canal sur la base, au moins en partie, de l'activité reçue sur le canal respectif pendant la période d'écoute.

15. Support porteur lisible par ordinateur non transitoire comprenant un produit programme d'ordinateur configuré de telle sorte que, lorsqu'il est mis en œuvre sur un concentrateur qui est configuré pour une communication sans fil sélective sur un quelconque canal d'une pluralité de canaux de communication sans fil, amène le concentrateur à :
transmettre une demande de réponse, la demande de réponse comprenant une demande pour au moins un ou tout dispositif recevant et traitant au moins une partie de la demande de réponse pour transmettre une réponse au cours d'une période d'écoute ;
pendant la période d'écoute, écouter chaque canal de la pluralité de canaux ; et
déterminer une caractéristique d'activité pour chaque canal sur la base, au moins en partie, de l'activité reçue sur le canal respectif pendant la période d'écoute.
